# EUROPEAN PATENT APPLICATION

(11) **EP 3 401 470 A1**
(43) Date of publication of application: **14.11.2018**
(21) Application number: 16883794.6
(22) Date of filing: 21.12.2016
(51) Int. Cl.: E05B 49/00, E05B 47/00, E05B 57/00, G06T 7/00

(54) **DOOR-USE IRIS AUTHENTICATION DEVICE, AND IRIS AUTHENTICATION SYSTEM**

(30) Priority: 08.01.2016 JP 2016002938
(71) Applicant: Nidec-Read Corporation, Kyoto-shi, Kyoto 615-0854 (JP)
(72) Inventor: KUSUDA Tatsufumi, Kyoto-shi Kyoto 615-0854 (JP)
(74) Representative: Viering, Jentschura & Partner mbB Patent- und Rechtsanwälte
(86) International application number: PCT/JP2016/088083
(87) International publication number: WO 2017/119295

(57) **Abstract**

[Problem] To provide an door-use iris authentication device that is easy to install and an iris authentication system.

[Solution] A door-use iris authentication device configured to be attachable to a door to unlock the door, the door-use iris authentication device includes: an unlocking mechanism that unlocks the door to which the door-use iris authentication device is attached; an imaging unit that captures an image; an authentication unit that performs iris authentication based on the image captured by the imaging unit and unlocks the door using the unlocking mechanism when the iris authentication is successfully performed; and a housing that integrally accommodates the unlocking mechanism, the imaging unit, and the authentication unit.

## Description

### TECHNICAL FIELD

The present invention relates to a door-use iris authentication device and an iris authentication system for performing authentication by imaging an iris of a person's eye.

### BACKGROUND ART

Conventionally, iris authentication in which the authentication is performed by imaging the iris of the person's eye is known. The iris authentication is used to manage entry and exit of a person in and from an area, such as a room or a building, which is necessary for requiring security. An iris authentication system in which a collator that images the iris of the person's eye to compare the iris to registered iris data is installed on a wall surface next to a door is known as the iris authentication device that performs the iris authentication (For example, see Patent Literature 1).

### CITATION LIST

### PATENT LITERATURE

Patent Literature 1: Japanese Unexamined Patent Application Publication No. 2001-118103

### SUMMARY OF INVENTION

However, in the above iris authentication system, it is necessary to install the collator on the wall surface, so that an attachment space for the collator is required on the wall surface next to the door. Additionally, it is necessary to install the collator on the wall surface. Therefore, the above iris authentication system has a disadvantage that the iris authentication system is not easy to install.

An object of the present invention is to provide a door-use iris authentication device that is easy to install and an iris authentication system.

According to an aspect of the present invention, a door-use iris authentication device configured to be attachable to a door to unlock the door, the door-use iris authentication device includes: an unlocking mechanism that unlocks the door to which the door-use iris authentication device is attached; an imaging unit that captures an image; an authentication unit that performs iris authentication based on the image captured by the imaging unit and unlocks the door using the unlocking mechanism when the iris authentication is successfully performed; and a housing that integrally accommodates the unlocking mechanism, the imaging unit, and the authentication unit.

According to this configuration, the door-use iris authentication device performs the iris authentication based on the image captured by the imaging unit, and can unlock the door when the iris authentication is successfully performed. The door-use iris authentication device is integrally formed while accommodated in the housing, and the door-use iris authentication device can be attached to the door. As a result, according to this configuration, necessity of an attachment space for the collator on the wall surface next to the door is eliminated, and necessity of attachment work for attaching the collator to the wall surface is also eliminated. Thus, the door-use iris authentication device is easy to install.

Preferably a lock body that locks and unlocks the door is accommodated in a thickness of the door, a lock-side engagement unit that receives driving force for the locking and the unlocking is provided in the lock body, and the unlocking mechanism includes an engagement unit that engages the lock-side engagement unit, and unlocks the lock body by driving the engagement unit.

According to this configuration, the lock-side engagement unit of the lock body and the engagement unit of the door-use iris authentication device can be engaged with each other by attaching the door-use iris authentication device to the door. Consequently, the door can be unlocked by the door-use iris authentication device that is attached to the door later.

Preferably the door includes : a handle operated by a user; and a latch bolt that advances and retracts in conjunction with the handle, and the unlocking mechanism locks the door by fixing the handle or by interrupting interlock of the handle and the latch bolt, and unlocks the door by releasing the fixing of the handle or by the interlock of the handle and the latch bolt.

According to this configuration, the door can be locked and unlocked by attaching the door-use iris authentication device to the door including the latch bolt that advances and retracts in conjunction with the handle.

Preferably the door-use iris authentication device further includes a handle operated by a user. The handle includes a shaft extending substantially perpendicular to a plate surface of the door, and the shaft penetrates the housing and is attached to the door.

According to this configuration, the door-use iris authentication device is attached to the attachment position of the handle.

Preferably the door includes: the handle operated by the user; and the latch bolt that advances and retracts in conjunction with the handle, the handle includes the shaft extending substantially perpendicular to the plate surface of the door, a through-hole through which the shaft can pass is made in the housing, and the shaft passes through the through-hole and is attached to the door.

According to this configuration, the through-hole through which the shaft of the handle of the door can pass is made in the housing of the door-use iris authentication device, so that the shaft of the handle passes through the housing of the door-use iris authentication device to easily attach the door-use iris authentication device at the position where the handle of the door is attached.

Preferably the door has an up-and-down direction that is planned to be disposed vertically as a fitting, and the imaging unit has a center in an imaging direction of the imaging unit which is inclined upward from a horizontal direction of the door.

The handle of the door and the cylinder lock are usually provided in a vicinity of a center in a height direction of the door according to the position of the hand of an adult. According to this configuration, in order to engage or interfere with the handle of the door or the cylinder lock, the door-use iris authentication device is easily attached in a vicinity of the center in the height direction of the door to which the handle or the cylinder lock is attached. Since the door-use iris authentication device is attached at a position lower than the position of adult's eyes, the center in the imaging direction of the imaging unit is inclined upward from the horizontal direction of the door. Consequently, the imaging direction is directed to the direction of the eyes, and the iris image is easily captured.

Preferably the door-use iris authentication device further includes: a storage that stores reference information becoming a criterion of determination of the iris authentication; and a reference information acquisition unit that acquires the reference information from an outside of the door-use iris authentication device and stores the reference information in the storage.

According to this configuration, after the reference information is stored in the storage, the iris authentication can be performed alone by the door-use iris authentication device.

Preferably the authentication unit includes: an imaging information transmitter that transmits imaging information about the image captured by the imaging unit to the outside; and an authentication result receiver that receives authentication result information about an iris authentication result based on the imaging information from the outside, and the authentication unit unlocks the door based on the authentication result information.

According to this configuration, after the imaging information is transmitted to the outside to externally perform the iris authentication processing, the authentication result information about the authentication result is received, and the door can be unlocked based on the authentication result information. Consequently, the door-use iris authentication device does not need to execute the iris authentication processing, so that a load on the door-use iris authentication device can be reduced.

Preferably the door-use iris authentication device further includes the door.

According to this configuration, the door-use iris authentication device is configured as a device including the door.

According to an aspect of the present invention, an iris authentication system includes: the door-use iris authentication device; a reference image capturing unit that captures an image of a user's iris; a reference information generator that generates the reference information based on the iris image captured by the reference image capturing unit; and a reference information transmitter that transmits the reference information generated by the reference information generator to the door-use iris authentication device.

According to this configuration, the image of the user's iris is captured, and the reference information generated based on the captured iris image is transmitted to the door-use iris authentication device. After that, the door-use iris authentication device can alone perform the iris authentication.

According to an aspect of the present invention, an iris authentication system includes: the door-use iris authentication device; a reference image capturing unit that captures an image of a user's iris; a reference information generator that generates reference information becoming a criterion of determination of iris authentication based on the iris image captured by the reference image capturing unit; a storage that stores the reference information generated by the reference information generator; an imaging information receiver that receives the imaging information from the door-use iris authentication device; an authentication processor that performs the iris authentication based on the reference information stored in the storage and the imaging information received by the imaging information receiver; and an authentication result transmitter that transmits information about an iris authentication result of the authentication processor as authentication result information to the door-use iris authentication device.

According to this configuration, the iris authentication is performed based on the imaging information transmitted by the door-use iris authentication device, and the information about the iris authentication result can be transmitted as the authentication result information to the door-use iris authentication device. Consequently, the door-use iris authentication device can receive the authentication result information, and unlock the door based on the authentication result information. Consequently, the door-use iris authentication device does not need to execute the iris authentication processing, so that a load on the door-use iris authentication device can be reduced.

According to an aspect of the present invention, an iris authentication system includes: the door-use iris authentication device; a reference image capturing unit that captures an image of a user's iris; and a reference information generator that generates reference information becoming a criterion of iris authentication performed by the door-use iris authentication device based on the iris image captured by the reference image capturing unit.

According to this configuration, the door-use iris authentication device performs the iris authentication based on the image captured by the imaging unit, and can unlock the door when the iris authentication is successfully performed. The door-use iris authentication device can be attached to the door. As a result, according to this configuration, necessity of an attachment space for the collator on the wall surface next to the door is eliminated, and necessity of attachment work for attaching the collator to the wall surface is also eliminated.

According to an aspect of the present invention, an iris authentication system includes: a door-use iris authentication device configured to be attachable to a door to unlock the door; a reference image capturing unit that captures an image of a user's iris; and a reference information generator that generates reference information becoming a criterion of iris authentication performed by the door-use iris authentication device based on the iris image captured by the reference image capturing unit. The door-use iris authentication device includes: an unlocking mechanism that unlocks the door; an imaging unit that captures an image; and an authentication unit that performs the iris authentication based on the image captured by the imaging unit and the reference information and unlocks the door using the unlocking mechanism when the iris authentication is successfully performed.

According to this configuration, the door-use iris authentication device performs the iris authentication based on the image captured by the imaging unit, and can unlock the door when the iris authentication is successfully performed. The door-use iris authentication device can be attached to the door. As a result, according to this configuration, necessity of an attachment space for the collator on the wall surface next to the door is eliminated, and necessity of attachment work for attaching the collator to the wall surface is also eliminated.

Preferably the iris authentication system further includes a history information storage that cumulatively stores the authentication result of the iris authentication as history information.

According to this configuration, the authentication result of the iris authentication can cumulatively be stored as the history information, so that a history of unlocking or attempting to unlock the door can be stored and managed.

The door-use iris authentication device and iris authentication system having the above configuration are easy to install.

### BRIEF DESCRIPTION OF DRAWINGS

FIG. 1 is a block diagram mainly illustrating an example of an electric configuration of an iris authentication system according to a first embodiment of the present invention.
FIG. 2 is a perspective view illustrating an example of a configuration of a door-use iris authentication device according to the first embodiment of the present invention.
FIG. 3 is a partially enlarged view illustrating the door-use iris authentication device and a door in FIG. 2 in the vicinity of a handle.
FIG. 4 is a flowchart illustrating an example of operation of the door-use iris authentication device in FIG. 1.
FIG. 5 is a block diagram mainly illustrating an example of an electric configuration of an iris authentication system according to a second embodiment of the present invention.
FIG. 6 is a flowchart illustrating an example of operation of the iris authentication system in FIG. 5.

### DESCRIPTION OF EMBODIMENTS

Hereinafter, embodiments according to an aspect of the present invention will be described with reference to the drawings. In the drawings, the same configuration is designated by the same reference numeral, and the description will be omitted.

### (First embodiment)

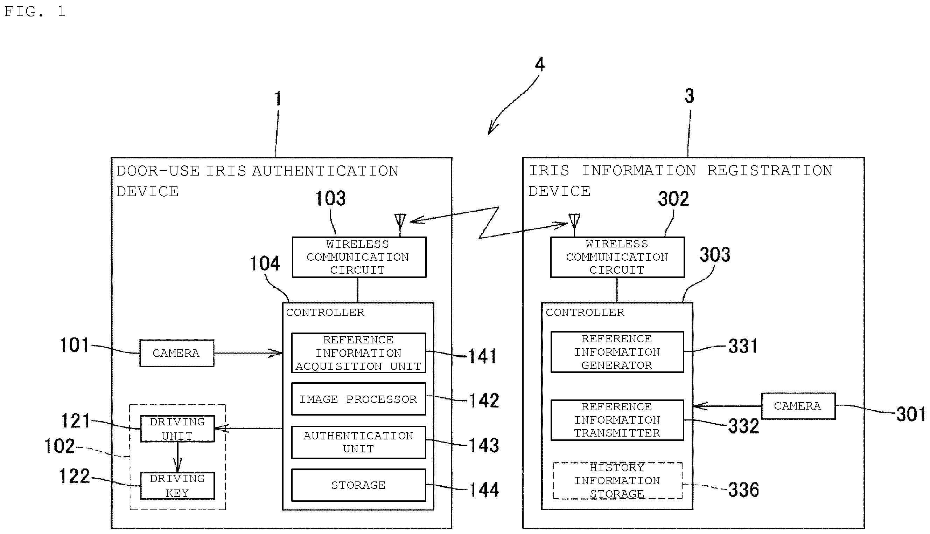

FIG. 1 is a block diagram mainly illustrating an example of an electric configuration of an iris authentication system 4 according to a first embodiment of the present invention. The iris authentication system 4 in FIG. 1 includes a door-use iris authentication device 1 and an iris information registration device 3. The iris authentication system 4 can be used for various applications. For example, the iris authentication system 4 can suitably be used to replace a key of each room of a hotel with the iris authentication.

For example, the door-use iris authentication device 1 is attached to a door of each room of the hotel. The door-use iris authentication device 1 unlocks the door when the iris authentication is successfully performed. For example, the iris information registration device 3 is installed in a lobby of the hotel. A guest checked in to the hotel captures an iris image of own eye in the lobby using the iris information registration device 3. The iris information registration device 3 generates reference information based on the captured iris image, and registers the reference information as reference information about a room in which the guest is accommodated. The door-use iris authentication device 1 performs the iris authentication based on the reference information. Consequently, the guest who images the iris of the own eye in the hotel lobby to register the reference information can use the own eye instead of the key to unlock the door of the room by the iris authentication.

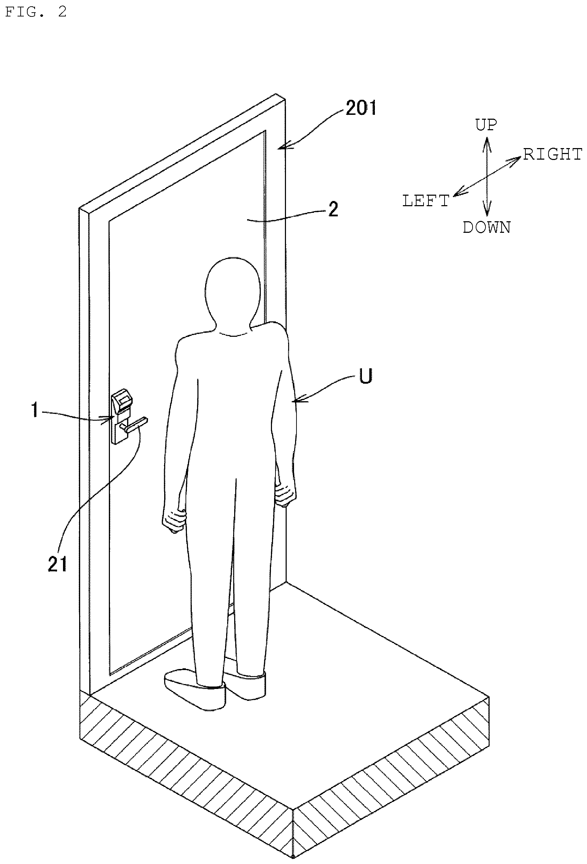

FIG. 2 is a perspective view illustrating an example of a configuration of the door-use iris authentication device 1 according to the first embodiment of the present invention. The door-use iris authentication device 1 in FIG. 2 is attached in the vicinity of a handle 21 of a door 2 attached to a wall surface 201. A longitudinal direction of the door 2 in FIG. 2 is set to an up-and-down direction in which the door 2 is vertically disposed as a fitting, and the door 2 is attached to the wall surface 201 such that the up-and-down direction of the door 2 becomes vertical. The door-use iris authentication device may include the door 2 to which the door-use iris authentication device 1 is attached.

For example, the door 2 may be a door of each room of the hotel, a door of a condominium or a detached residence, or a door of a doorway of a building or an inside of an office. The door-use iris authentication device 1 can be used while attached to various doors, and the door-use iris authentication device 1 can suitably be used as particularly an iris authentication device for the door 2 of each room of the hotel.

The door-use iris authentication device 1 is attached in the vicinity of the handle 21, so that usually the eye of a user U, namely, the iris is located above a position of the door-use iris authentication device 1. The position of the child's eye may be lower than the position of the door-use iris authentication device 1. However, for example, in the case that the door 2 is used as a door of the hotel room, the guest is usually an adult, so that there is a high probability that the eye of the user U is located above the position of the door-use iris authentication device 1.

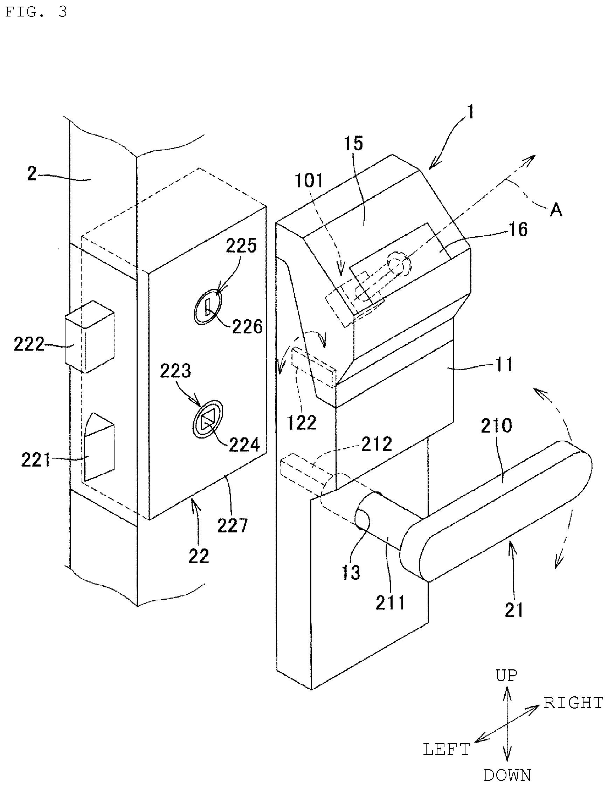

FIG. 3 is a partially enlarged view illustrating the door-use iris authentication device 1 and the door 2 in FIG. 2 in the vicinity of the handle 21. In the vicinity of an attachment position of the handle 21, a lock body 22 that locks and unlocks the door 2 is accommodated in a thickness of the door 2.

The lock body 22 includes a latch bolt 221 that advances and retracts in conjunction with operation of the handle 21 by the user U, a dead bolt 222 that locks the door 2, a handle attachment unit 223 that receives driving force for advancing and retracting the latch bolt 221 from the handle 21, a lock-side engagement unit 225 that receives driving force for advancing and retracting the dead bolt 222 from a driving key 122 (to be described later), a transmission mechanism (not illustrated) that converts turning motion of the handle attachment unit 223 into linear motion for advancing and retreating the latch bolt 221 and converts turning motion of the lock-side engagement unit 225 into linear motion for advancing and retracting the dead bolt 222, and a substantially box-shaped case 227 in which these components are accommodated.

The handle 21 includes a substantially rod-shaped grip 210 grasped by a user, a columnar shaft 211 extending in a direction perpendicular to an axial direction of the grip 210 from the vicinity of one end of the grip 210, and a square core 212, which is provided at a leading end of the shaft 211 and has, for example, a quadrangular prism shape. An insertion hole 224 in which the square core 212 can be inserted is made in the handle attachment unit 223. The grip is not limited to the rod shape, but may be, for example, a spherical shape or another shape.

The door-use iris authentication device 1 includes a substantially box-shaped housing 11 that is elongated in the up-and-down direction. The driving key 122 (engagement unit) that engages the lock-side engagement unit 225 protrudes from an attachment surface side of the housing 11 to the door 2. The driving key 122 is turned by a driving unit 121 (to be described later). A through-hole 13 through which the shaft 211 of the handle 21 passes is made in the housing 11. A groove 226 in which the driving key 122 is fitted is formed in the lock-side engagement unit 225.

Consequently, the door-use iris authentication device 1 is brought into close contact with the door 2, and the shaft 211 of the handle 21 passes through the through-hole 13 to insert the square core 212 in the insertion hole 224 while the lock-side engagement unit 225 engages the driving key 122, thereby attaching the door-use iris authentication device 1 to the door 2.

The door-use iris authentication device 1 is not limited to the example including the housing 11. For example, the door-use iris authentication device 1 does not include the housing 11, and each component of the door-use iris authentication device 1 may directly be attached to the door 2, or each component may be accommodated in the thickness of the door 2.

Usually, a cylinder lock is attached to the lock-side engagement unit 225, and the lock-side engagement unit 225 engages the cylinder lock. For this reason, an attachment mechanism that attaches the cylinder lock is provided in the lock-side engagement unit 225. After the cylinder lock and the handle 21 are removed from the typical door 2 that does not include the door-use iris authentication device 1, the door-use iris authentication device 1 is attached to the door 2, and the shaft 211 of the removed handle 21 passes through the through-hole 13 to attach the handle 21 to the door 2, which allows the door-use iris authentication device 1 to be attached to the door 2.

At least a part of a top surface of the housing 11 is an inclined surface 15 inclined with respect to a horizontal direction. A cold mirror 16 is attached to the inclined surface 15. The cold mirror 16 is a mirror that transmits an infrared ray and reflects visible light. For example, infrared illumination constructed with an infrared light emitting diode (LED) (not illustrated) may be provided, and the eyes of the user U may be illuminated with the infrared ray.

A camera 101 that images the eye of the user U through the cold mirror 16 is disposed in the housing 11. The camera 101 is constructed with an imaging element such as a complementary metal oxide semiconductor (CMOS) imaging element and a charge coupled device (CCD) and a lens that forms an image on the imaging element, and corresponds to an example of an imaging unit. The camera 101 outputs image data indicating the captured image to a controller 104 (to be described later).

An imaging direction A of the camera 101, namely, an optical axis direction of the lens of the camera 101 is inclined upward from the horizontal direction. As described above, the eyes of the user U are normally positioned above the door-use iris authentication device 1. Consequently, the imaging direction A of the camera 101 is inclined upward from the horizontal direction, and a portion above the door-use iris authentication device 1 is imaged, whereby the eyes of the user U are easily imaged.

The user U can position the own eyes at a proper imaging position by allowing the own eyes to appear on the cold mirror 16. An iris image can be captured by imaging with infrared light irrespective of an iris color difference, and the iris authentication processing is easily performed. The illuminating with the infrared light can illuminate the user without causing the user to feel dazzling. Other components included in the door-use iris authentication device 1 will be described later.

The door 2 does not necessarily include the dead bolt 222 or the lock-side engagement unit 225, and the door-use iris authentication device 1 does not necessarily advance and retract the dead bolt 222 to lock and unlock the door 2. For example, the door 2 may not include the dead bolt 222 or the lock-side engagement unit 225, and an unlocking mechanism 102 of the door-use iris authentication device 1 may not include the driving key 122.

In the unlocking mechanism 102, the handle 21 is fixed so as not to move, and the latch bolt 221 is not retracted into the door 2, whereby the door 2 may be locked. On the other hand, the fixing of the handle 21 is released, and the latch bolt 221 is retracted into the door 2 in conjunction with operation of the handle 21, whereby the door 2 may be unlocked. Alternatively, in the unlocking mechanism 102, the latch bolt 221 is not retracted into the door 2 by interrupting an interlocking operation of the handle 21 and the latch bolt 221, whereby the door 2 may be locked. On the other hand, the latch bolt 221 is retracted into the door 2 by the interlocking operation of the handle 21 and the latch bolt 221, whereby the door 2 may be unlocked.

The unlocking mechanism 102 may not lock the door 2. For example, the door 2 may include an automatic lock mechanism that is automatically locked when the door 2 is closed, and the unlocking mechanism 102 may only perform the unlocking according to an authentication result.

Referring to FIG. 1, the iris information registration device 3 includes a camera 301, a wireless communication circuit 302, and a controller 303. The camera 301 is a camera, which is configured similarly to the camera 101 and captures an iris image that becomes a criterion of the iris authentication. The camera 301 corresponds to an example of a reference image capturing unit. The controller 303 is constructed with, for example, a personal computer, and the camera 301 and the wireless communication circuit 302 are connected to the controller 303.

The wireless communication circuit 302 is a communication circuit that conducts wireless communication with the door-use iris authentication device 1. Various schemes can be adopted as a wireless scheme of the wireless communication circuit 302, but the wireless scheme is not limited to a specific communication scheme. For example, wireless fidelity (Wifi) can be adopted.

For example, the controller 303 includes a central processing unit (CPU) that performs predetermined calculation processing, a random access memory (RAM) that temporarily stores data, a nonvolatile storage device that stores a predetermined control program and data, and peripheral circuits thereof. The controller 303 functions as a reference information generator 331 and a reference information transmitter 332 by executing the control program.

The reference information generator 331 generates the reference information based on the iris image captured by the camera 301. The reference information may be information that can authenticate the user's iris. For example, the reference information may be an image of the captured iris image, characteristic data obtained by coding a characteristic extracted from the captured iris image, or information in which the captured iris image is simplified.

The reference information transmitter 332 causes the wireless communication circuit 302 to transmit the reference information generated by the reference information generator 331 to the door-use iris authentication device 1.

The door-use iris authentication device 1 includes the camera 101, the unlocking mechanism 102, a wireless communication circuit 103, and the controller 104. The unlocking mechanism 102 includes the driving unit 121 and the driving key 122. The camera 101, the driving unit 121, and the wireless communication circuit 103 are connected to the controller 104.

For example, the driving unit 121 is constructed with a motor or a gear mechanism. The driving unit 121 turns the driving key 122 in response to a control signal from the controller 104. When the door-use iris authentication device 1 is attached to the door 2, since the driving key 122 engages the lock-side engagement unit 225, so that the lock-side engagement unit 225 is turned in conjunction with the turning of the driving key 122. The turning of the lock-side engagement unit 225 is converted into the linear motion by the transmission mechanism (not shown), and the dead bolt 222 is advanced or retracted.

The door 2 is locked when the dead bolt 222 advances to protrude from a door end of the door 2, and the door 2 is unlocked when the dead bolt 222 retracts to be embedded in the door end of the door 2. That is, the unlocking mechanism 102 switches between the locking and the unlocking of the door 2 to which the door-use iris authentication device 1 is attached.

The wireless communication circuit 103 is a communication circuit that conducts wireless communication with the iris information registration device 3. The wireless communication circuit 103 conducts wireless communication with the wireless communication circuit 302 by the same communication scheme as the wireless communication circuit 302.

For example, the controller 104 includes a CPU that performs predetermined calculation processing, a RAM that temporarily stores data, a nonvolatile storage device that stores a predetermined control program and data, and peripheral circuits thereof. The storage device also functions as a storage 144 that stores the reference information that becomes a criterion for determining the iris authentication. The controller 104 functions as a reference information acquisition unit 141, an image processor 142, and an authentication unit 143 by executing a predetermined control program.

The reference information acquisition unit 141 acquires the reference information received from the wireless communication circuit 302 by the wireless communication circuit 103, and stores the reference information in the storage 144.

The storage 144 may store a plurality of pieces of reference information for authenticating a plurality of persons. The authentication unit 143 and an authentication processor 334 (to be described later) may determine the successful iris authentication when the iris authentication is successfully performed based on one of the plurality of pieces of reference information stored in the storage 144. For example, reference information is stored in the storage 144 in order to perform the iris authentication on hotel employees who clean rooms and provide service, hotel managers, and executives in addition to the guests, which allows the iris authentication to be performed on people other than guests. Consequently, employees, managers, and executives other than the guests can unlock the hotel room by the iris authentication and provide the service.

The image processor 142 extracts the iris image from the image captured by the camera 101 by a known image recognition technique, and outputs the iris image to the authentication unit 143.

Based on the iris image transmitted from the image processor 142, the authentication unit 143 performs the iris authentication by a known iris authentication technique. Specifically, the authentication unit 143 performs the iris authentication by comparing the iris image transmitted from the image processor 142 or the characteristic data obtained from the iris image to the reference information stored in the storage 144. Upon the successful authentication, the authentication unit 143 drives the driving unit 121 to turn the driving key 122, thereby unlocking the door 2. Consequently, the user in whom the authentication is successfully performed can open the door 2.

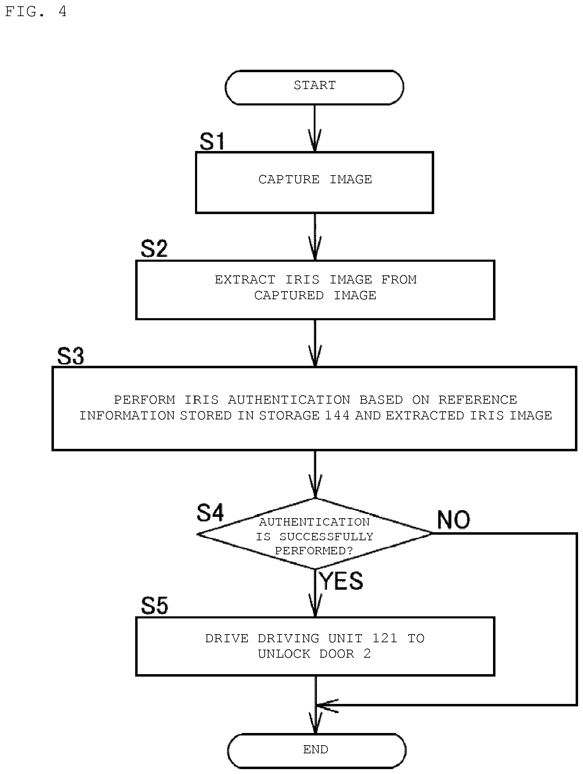

FIG. 4 is a flowchart illustrating an example of operation of the door-use iris authentication device 1 in FIG. 1. For example, as illustrated in FIG. 2, a user who tries to open the door 2 stands in front of the door 2 such that user's eyes appear on the cold mirror 16 of the door-use iris authentication device 1. Consequently, the user's eyes are imaged by the camera 101 (step S1). The door-use iris authentication device 1 may include a human sensor that detects a human body in the vicinity of the door-use iris authentication device 1, and the camera 101 may capture an image when the human body is detected by the human sensor.

Then, the image processor 142 extracts the iris image from the image captured by the camera 101 (step S2). Then, the authentication unit 143 performs the iris authentication based on the reference information stored in the storage 144 and the extracted iris image (step S3).

When the authentication is successfully performed (YES in step S4), the authentication unit 143 drives the driving unit 121 to unlock the door 2 (step S5), and the processing is ended. On the other hand, when the authentication unit 143 fails to the authentication (NO in step S4), the authentication unit 143 ends the processing while keeping the locked state without unlocking the door 2.

The controller 104 may further include a real time clock (RTC) that times current date and time. The authentication unit 143 may cumulatively store the authentication result in step S4 in the storage 144 as history information while correlating the authentication result with the current date and time, namely, the date and time when the authentication is performed. When the authentication is successfully performed in step S4, the authentication unit 143 may further store information indicating the reference information about successful authentication in the storage 144 as history information while correlating the information indicating the reference information about successful authentication with the authentication result, namely, information indicating the successful authentication and the current date and time. In this case, the storage 144 corresponds to an example of a history information storage.

Alternatively, the iris information registration device 3 may further include a history information storage 336 that stores the history information as indicated by a broken line in FIG. 1. The authentication unit 143 may cause the wireless communication circuit 103 to transmit the history information to the iris information registration device 3, and the controller 303 of the iris information registration device 3 may cumulatively store the history information transmitted from the door-use iris authentication device 1 in the history information storage 336.

Consequently, a history of unlocking or attempting to unlock the door 2 to which the door-use iris authentication device 1 is attached can be stored and managed. The reference information is information corresponding to the specific user U, so that the information indicating the reference information is information indicating the specific user U. Thus, in the case that the history information includes information indicating the reference information, when and who unlocks the door 2 can be stored and managed. Further, a record of unlocking the door 2 by someone who is not previously registered can be stored and managed by storing the authentication result indicating the authentication failure as the history information.

As described above, according to the door-use iris authentication device 1 and the iris authentication system 4, the door 2 can be unlocked by the iris authentication by attaching the door-use iris authentication device 1 to the door 2. Therefore, according to the door-use iris authentication device 1 and the iris authentication system 4, attachment work for attaching a collator to the wall surface or wall surface space for attaching the collator is not required, so that installation is easily performed.

### (Second Embodiment)

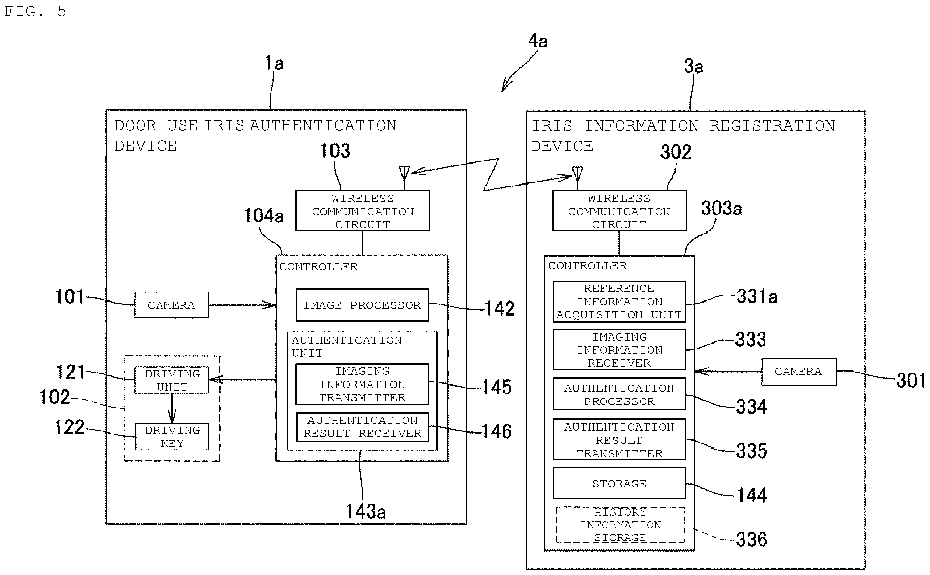

An iris authentication system 4a according to a second embodiment of the present invention will be described below. FIG. 5 is a block diagram mainly illustrating an example of an electric configuration of the iris authentication system 4a according to the second embodiment of the present invention. The iris authentication system 4a in FIG. 5 includes a door-use iris authentication device 1a and an iris information registration device 3a.

The door-use iris authentication device 1a in FIG. 5 differs from the door-use iris authentication device 1 of the first embodiment in that the door-use iris authentication device 1a does not include the reference information acquisition unit 141 and the storage 144, and that an authentication unit 143a includes an imaging information transmitter 145 and an authentication result receiver 146. The iris information registration device 3a in FIG. 5 differs from the iris information registration device 3 of the first embodiment in that a controller 303a does not include the reference information transmitter 332, but includes an imaging information receiver 333, an authentication processor 334, an authentication result transmitter 335, and the storage 144. A reference information generator 331a differs from the reference information generator 331 in operation.

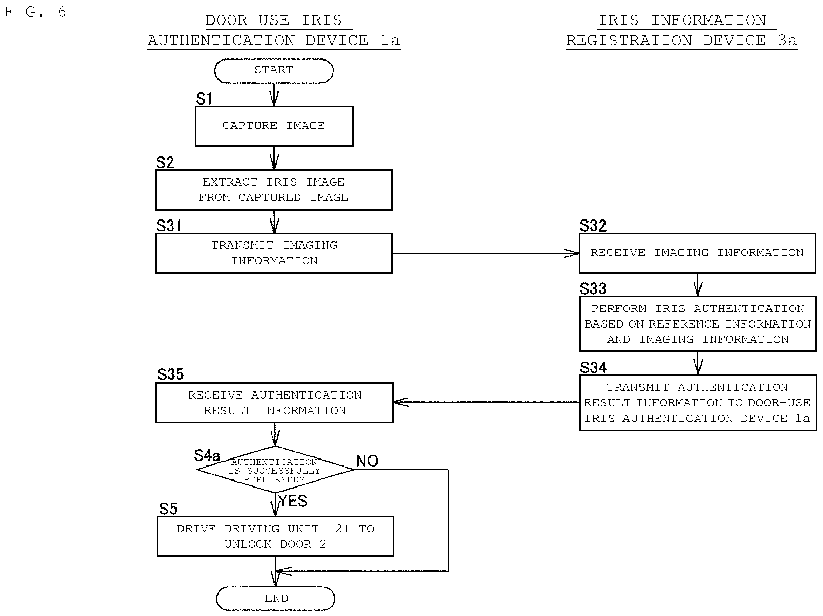

Since the iris authentication system 4a in FIG. 5 has the configuration similar to that of the iris authentication system 4 of the first embodiment in other respects, only a characteristic point will be described below with reference to a flowchart in FIG. 6. In the flowchart of FIG. 6, the same step as the flowchart in FIG. 4 is denoted by the same step numbers, and the description will be omitted.

The reference information generator 331a of the iris information registration device 3a differs from the reference information generator 331 in that the generated reference information is stored in the storage 144. The flowchart in FIG. 6 differs from the flowchart in FIG. 4 in that steps S31 to S35 are included instead of step S3, and that processing in step S4a is different.

The imaging information transmitter 145 of the door-use iris authentication device 1a causes the wireless communication circuit 103 to transmit the imaging information about the image captured by the camera 101 to the iris information registration device 3a (step S31). The imaging information may be information that can authenticate the user's iris with respect to the image captured by the camera 101. For example, the imaging information may be the image captured by the camera 101, the iris image extracted from the image captured by the camera 101 using the image processor 142, the characteristic data obtained by coding the characteristic extracted from the iris image, or the information in which the iris image is simplified.

The imaging information receiver 333 of the iris information registration device 3a receives the imaging information from the door-use iris authentication device 1a by receiving the imaging information by the wireless communication circuit 302 (step S32). The authentication processor 334 performs the iris authentication based on the reference information stored in the storage 144 and the imaging information received by the imaging information receiver 333 (step S33). The authentication result transmitter 335 transmits the information about the iris authentication result of the authentication processor 334 to the door-use iris authentication device 1a by causing the wireless communication circuit 302 to transmit the information about the iris authentication result as authentication result information (step S34).

The authentication result receiver 146 of the door-use iris authentication device 1a receives the authentication result information from the iris information registration device 3a by causing the wireless communication circuit 103 to receive the authentication result information (step S35). Based on the authentication result information, the authentication unit 143a determines whether the authentication is successfully performed (step S4a). When the authentication is successfully performed (YES in step S4a), the authentication unit 143a drives the driving unit 121 to unlock the door 2 (step S5), and the processing is ended. On the other hand, when the authentication unit 143 fails to the authentication (NO in step S4a), the authentication unit 143 ends the processing while keeping the locked state without unlocking the door 2.

The authentication result information is not limited to information indicating whether the iris authentication is successfully performed, but the authentication result information may be information instructing the unlocking in the case that the authentication is successfully performed as a result of the iris authentication, and the authentication result information may be information instructing the locking in the case of authentication failure as the result of the iris authentication. The authentication unit 143a may switch between the unlocking and locking of the door 2 according to an instruction content indicated by the authentication result information.

The controller 303a of the iris information registration device 3a may further include an RTC that times the current date and time and the history information storage 336 that stores the history information as indicated by a broken line in FIG. 5. The authentication processor 334 may cumulatively store the authentication result in step S33 in the history information storage 336 as the history information while correlating the authentication result with the current date and time, namely, the date and time when the authentication is performed. When the authentication is successfully performed in step S33, the authentication processor 334 may further store information indicating the reference information about successful authentication in the history information storage 336 as the history information while correlating the information indicating the reference information about successful authentication with the authentication result, namely, information indicating the successful authentication and the current date and time.

Consequently, the history of unlocking or attempting to unlock the door 2 to which the door-use iris authentication device 1a is attached can be stored and managed. The reference information is information corresponding to the specific user U, so that the information indicating the reference information is information indicating the specific user U. Thus, in the case that the history information includes information indicating the reference information, when and who unlocks the door 2 can be stored and managed. Further, a record of unlocking the door 2 by someone who is not previously registered can be stored and managed by storing the authentication result indicating the authentication failure as the history information.

For example, an emergency detection device, such as an emergency button or a fire detector, which detects emergency, may be connected to the controllers 303, 303a of the door-use iris authentication devices 1, 1a. When emergency is detected by the emergency detection device such that the emergency button is pushed or a fire is detected by the fire detector, the controllers 303, 303a may cause the wireless communication circuit 302 to transmit an emergency signal indicating emergency to the door-use iris authentication device 1, 1a attached to each room of the hotel. When emergency signals are received by the wireless communication circuit 103, the controllers 303, 303a of the door-use iris authentication devices 1, 1a may unlock the doors 2 using the unlocking mechanism 102. Consequently, the doors 2 of all rooms of the hotel can be unlocked in case of emergency, so that evacuation behavior becomes easy in case of emergency.

### REFERENCE SIGNS LIST

- 1, 1a: door-use iris authentication device
- 2: door
- 3, 3a: iris information registration device
- 4, 4a: iris authentication system
- 11: housing
- 13: through-hole
- 15: inclined surface
- 16: cold mirror
- 21: handle
- 22: lock body
- 101: camera (imaging unit)
- 102: unlocking mechanism
- 103: wireless communication circuit
- 104,: 303, 303a controller
- 105: storage
- 121: driving unit
- 122: driving key (engagement unit)
- 141: reference information acquisition unit
- 142: image processor
- 143,: 143a authentication unit
- 144: storage
- 145: imaging information transmitter
- 146: authentication result receiver
- 201: wall surface
- 210: grip
- 211: shaft
- 212: square core
- 221: latch bolt
- 222: dead bolt
- 223: handle attachment unit
- 224: insertion hole
- 225: lock-side engagement unit
- 226: groove
- 227: case
- 301: camera (reference image capturing unit)
- 302: wireless communication circuit
- 331, 331a: reference information generator
- 332: reference information transmitter
- 333: imaging information receiver
- 334: authentication processor
- 335: authentication result transmitter
- 336: history information storage
- A: imaging direction
- U: user

## Claims

1. A door-use iris authentication device configured to be attachable to a door to unlock the door, the door-use iris authentication device comprising:
an unlocking mechanism that unlocks the door to which the door-use iris authentication device is attached;
an imaging unit that captures an image;
an authentication unit that performs iris authentication based on the image captured by the imaging unit and unlocks the door using the unlocking mechanism when the iris authentication is successfully performed; and
a housing that integrally accommodates the unlocking mechanism, the imaging unit, and the authentication unit.

2. The door-use iris authentication device according to claim 1, wherein a lock body that locks and unlocks the door is accommodated in a thickness of the door,
a lock-side engagement unit that receives driving force for the locking and the unlocking is provided in the lock body, and
the unlocking mechanism includes an engagement unit that engages the lock-side engagement unit, and unlocks the lock body by driving the engagement unit.

3. The door-use iris authentication device according to claim 1, wherein the door includes:
a handle operated by a user; and
a latch bolt that advances and retracts in conjunction with the handle, and
the unlocking mechanism locks the door by fixing the handle or by interrupting interlock of the handle and the latch bolt, and unlocks the door by releasing the fixing of the handle or by the interlock of the handle and the latch bolt.

4. The door-use iris authentication device according to any one of claims 1 to 3, further comprising a handle operated by a user,
wherein the handle includes a shaft extending substantially perpendicular to a plate surface of the door, and
the shaft penetrates the housing and is attached to the door.

5. The door-use iris authentication device according to any one of claims 1 to 4, wherein the door includes:
the handle operated by the user; and
the latch bolt that advances and retracts in conjunction with the handle,
the handle includes the shaft extending substantially perpendicular to the plate surface of the door,
a through-hole through which the shaft can pass is made in the housing, and
the shaft passes through the through-hole and is attached to the door.

6. The door-use iris authentication device according to any one of claims 2 to 5, wherein the door has an up-and-down direction that is planned to be disposed vertically as a fitting, and
the imaging unit has a center in an imaging direction of the imaging unit which is inclined upward from a horizontal direction of the door.

7. The door-use iris authentication device according to any one of claims 1 to 6, further comprising: a storage that stores reference information becoming a criterion of determination of the iris authentication; and
a reference information acquisition unit that acquires the reference information from an outside of the door-use iris authentication device and stores the reference information in the storage.

8. The door-use iris authentication device according to any one of claims 1 to 6, wherein the authentication unit includes:
an imaging information transmitter that transmits imaging information about the image captured by the imaging unit to an outside; and
an authentication result receiver that receives authentication result information about an iris authentication result based on the imaging information from the outside, and
the authentication unit unlocks the door based on the authentication result information.

9. The door-use iris authentication device according to any one of claims 1 to 8, further comprising the door.

10. An iris authentication system comprising: the door-use iris authentication device according to claim 7;
a reference image capturing unit that captures an image of a user's iris;
a reference information generator that generates reference information based on the iris image captured by the reference image capturing unit; and
a reference information transmitter that transmits the reference information generated by the reference information generator to the door-use iris authentication device.

11. An iris authentication system comprising: the door-use iris authentication device according to claim 8;
a reference image capturing unit that captures an image of a user's iris;
a reference information generator that generates reference information becoming a criterion of determination of the iris authentication based on the iris image captured by the reference image capturing unit;
a storage that stores the reference information generated by the reference information generator;
an imaging information receiver that receives the imaging information from the door-use iris authentication device;
an authentication processor that performs the iris authentication based on the reference information stored in the storage and the imaging information received by the imaging information receiver; and
an authentication result transmitter that transmits information about an iris authentication result of the authentication processor as authentication result information to the door-use iris authentication device.

12. An iris authentication system comprising: the door-use iris authentication device according to any one of claims 1 to 9;
a reference image capturing unit that captures an image of a user's iris; and
a reference information generator that generates reference information becoming a criterion of iris authentication performed by the door-use iris authentication device based on the iris image captured by the reference image capturing unit.

13. An iris authentication system comprising: a door-use iris authentication device configured to be attachable to a door to unlock the door;
a reference image capturing unit that captures an image of a user's iris; and
a reference information generator that generates reference information becoming a criterion of iris authentication performed by the door-use iris authentication device based on the iris image captured by the reference image capturing unit,
wherein the door-use iris authentication device includes:
an unlocking mechanism that unlocks the door;
an imaging unit that captures an image; and
an authentication unit that performs the iris authentication based on the image captured by the imaging unit and the reference information and unlocks the door using the unlocking mechanism when the iris authentication is successfully performed.

14. The iris authentication system according to any one of claims 10 to 13, further comprising a history information storage that cumulatively stores the authentication result of the iris authentication as history information.
